# EUROPEAN PATENT APPLICATION

(11) **EP 2 615 793 A1**
(43) Date of publication of application: **17.07.2013**
(21) Application number: 13151149.5
(22) Date of filing: 14.01.2013
(51) Int. Cl.: H04L 29/06, H04W 12/12, H04L 12/58, H04W 48/18

(54) **Methods and systems for protecting network devices from intrusion**

(30) Priority: 12.01.2012 US 201261586078 P
(71) Applicant: ARXCEO Corporation, Atlanta, GA 30309 (US)
(72) Inventor: Winn, James Marcus, Atlanta, GA Georgia 30306 (US); Yoda, Nobuhisa, Colorado, CO Colorado 80111 (US); Somers, Jonathan, Jacksonville, FL Florida 32258 (US)
(74) Representative: Harris, Ian Richard

(57) **Abstract**

Methods and systems for protecting a computing device to ensure network security are provided. In particular, one or more blacklists may be maintained by an Intrusion Protection System (IPS) for a computing device. Such blacklists may include information such as network addresses of suspected or confirmed rogue entities that pose threat to the security of the computing device. In an embodiment, the blacklists are dynamically updated (e.g., purged) when a network-related change is detected indicating, for example, that the computing device is moving from one network location to another. In some embodiments, one or more blacklists may each correspond to a communication channel, application, process or the like. In some embodiments, only selected blacklists are updated, such as those that are rendered stale or inapplicable by the detected network changes.

## Description

### CROSS-REFERENCE

This application claims the benefit of U.S. Provisional Application No. 61/586,078, filed January 12, 2012, which application is incorporated herein by reference in its entirety.

### BACKGROUND OF THE INVENTION

With the increasing prevalence of mobile devices, there is an increasing need to provide privacy and security for such mobile device. Traditional Network Intrusion Detection Devices (NIDD's) and Intrusion Protection or Prevention Systems (IPS's) have commonly been used to detect intrusions and/or to provide network security. However, such systems typically operate under the assumption of a relatively static network environment. Such an assumption may no longer hold when mobile devices frequently move from one network location to another, potentially rendering stale previously detected profiles of potential attackers.

### SUMMARY OF THE INVENTION

In an embodiment, a computer-implemented method of managing network traffic is provided. In particular, the method includes maintaining a blacklist associated with a computing device, the blacklist including information about one or more entities determined likely to pose a threat to the computing device. Such one or more entities may be detected by an Intrusion Protection System (IPS). The method also includes detecting a network-related change relevant to the computing device and in response, updating the blacklist associated with the computing device. In some embodiments, the updating may include removing some or all information included in the blacklist.

In another embodiment, a computer system for preventing network intrusions is provided. In particular, the computer system is configured to maintain one or more blacklists each including information about one or more entities determined likely to pose a threat to the computing system, detect one or more network-related changes relevant to the computer system, select a subset of the one or more blacklists rendered inapplicable by the detected one or more network-related changes, and update selected subset of the one or more blacklists.

In another embodiment, a computer program product is provided that comprises executable instructions that, when executed by one or more processors of a computer system, cause the computer system to at least detect a network-related change relevant to a computing device and in response to detecting the network-related change, update a blacklist associated with the computing device, the blacklist including information about one or more entities determined likely to pose a pose threat to the computing device. The computer program product can comprise one or more non-transitory computer-readable storage media having said executable instructions stored thereon.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

FIG. 1 illustrates an example environment for implementing dynamic blacklist update, in accordance with at least one embodiment.

FIG. 2 illustrates components of an example computing device, in accordance with at least one embodiment.

FIG. 3 illustrates another example environment for implementing dynamic blacklist update, in accordance with at least one embodiment.

FIG. 4 illustrates components of an example IPS, in accordance with at least one embodiment.

FIG. 5 illustrates an example process for implementing intrusion detection and prevention, in accordance with at least one embodiment.

FIG. 6 illustrates an example process for implementing blacklist update, in according with at least one embodiment.

FIG. 7 illustrates an example process for implementing selective blacklist update, in accordance with at least one embodiment.

FIG. 8 illustrates an example process for implementing blacklist update, in accordance with at least one embodiment.

### DETAILED DESCRIPTION OF THE INVENTION

While preferable embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in using the invention.

The present invention provides systems and methods for providing network security for computing devices. In particular, the methods and techniques are provided for dynamically updating blacklists associated with an Intrusion Protection System (IPS) hosted by a computing device to accurately identify and block threats to the devices, when the network environment for the computing device changes. For example, the dynamic blacklist is purged when the device detects that its network configuration has changed, so that the IPS continues to use the updated blacklist to accurately detect and effectively block threats to the device.

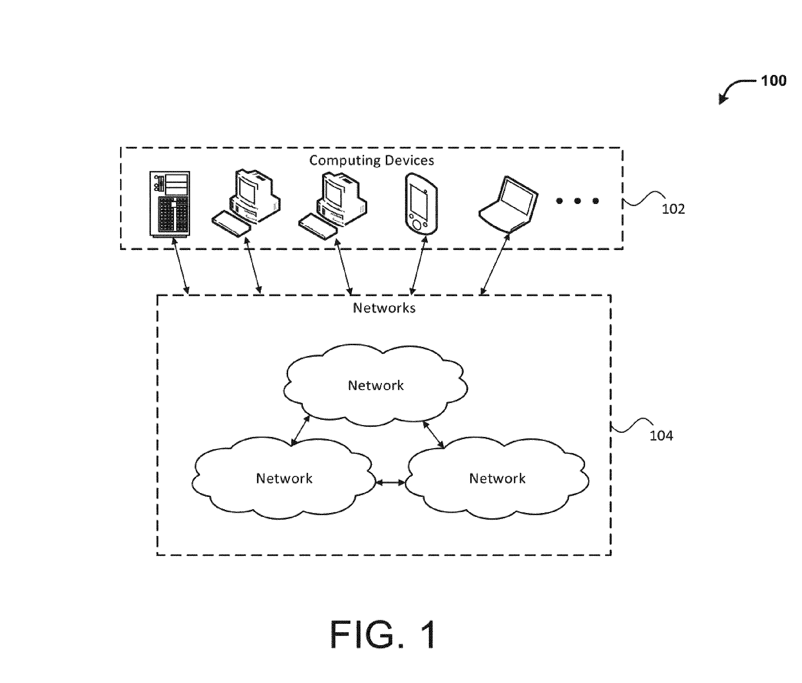

FIG. 1 illustrates an example environment 100 for implementing dynamic blacklist update, in accordance with at least one embodiment. In this environment, one or more computing devices 102 may be connected to one or more networks 104. In various embodiments, computing devices 102 may include any devices capable of communicating with a network. In various embodiments, computing devices 102 may include a personal computer, server computer, or laptop computer; mobile devices, such as a tablet, personal digital assistants (PDAs) such as a Palm-based device or Windows CE device; phones such as cellular phones, smartphones (e.g., iPhone, BlackBerry, Android, Treo); a wireless device such as a wireless email device or other device capable of communicating wirelessly with a computer network or other communication network; or any other type of network device that may communicate over a network and handle electronic transactions. One or more of the devices may be handheld devices. Any discussion herein of computers or mobile devices may also be applied to any other network devices as provided.

In various embodiments, the networks 104 include any communication networks such as any public and/or private, wired or wireless, voice and/or data networks. Examples of networks 104 may include the Internet, Personal Area Network (PAN), Local Area Network (LAN), Wireless Local Area Network (WLAN or Wi-Fi), Wide Area Network (WAN), backbone network, Virtual Private Network (VPN), cellular network, telephone network, radio network and the like. In various embodiments, the networks 104 may be implemented using any wired and/or wireless technologies such as in accordance with IEEE 802.11, 4G, Bluetooth and other standards.

In various embodiments, some of the networks 104 may or may not communicate or overlap with the others. Such overlap or relay of networks may be implemented by servers, access/exchange points and the like provided, for example, by Internet Service Providers, mobile carriers and the like. For example, a WLAN may provide access to the Internet via the use of a router connected to an ISP. A cellular network may interface with another cellular or non-cellular network via base stations and/or servers.

In various embodiments, one or more computing device 102 may be configured to communicate with one or more networks 104 and network devices such as routers, switches, servers and the like. At any given time, one computing device 102 may be communicating with multiple networks. For example, a mobile device such as a smart phone may be connected to a WLAN as well as a cellular network. In addition, multiple computing devices 102 may communicate with one network such as the Internet, a LAN or the like. Over time, a computing device may be connected to and/or disconnected from various networks. For example, a mobile device operated by a user may move in and out of service areas of various WLANs, from one cellular network to another and the like, as the user travels from one location to another.

In various embodiments, computing devices 102 may interact, over one or more networks 104 with other computing systems or devices 102. For example, a client device may communicate, via the Internet, with a server such as a web server, a data server and the like. One or more networks may communicate with one or more computers or other network devices across a particular network. For example, a plurality of devices may communicate with a single network, or with a plurality of networks. The network, for example, can include a private network, such as a LAN, or interconnections to the online organizations over a communications network, such as the Internet or World Wide Web or any other network that is capable of communicating digital data, such as a wireless, cellular, or telecommunications network. Each mobile device or other network device may connect to one or more web server over the network using data protocols, such as HTTP, HTTPS and the like.

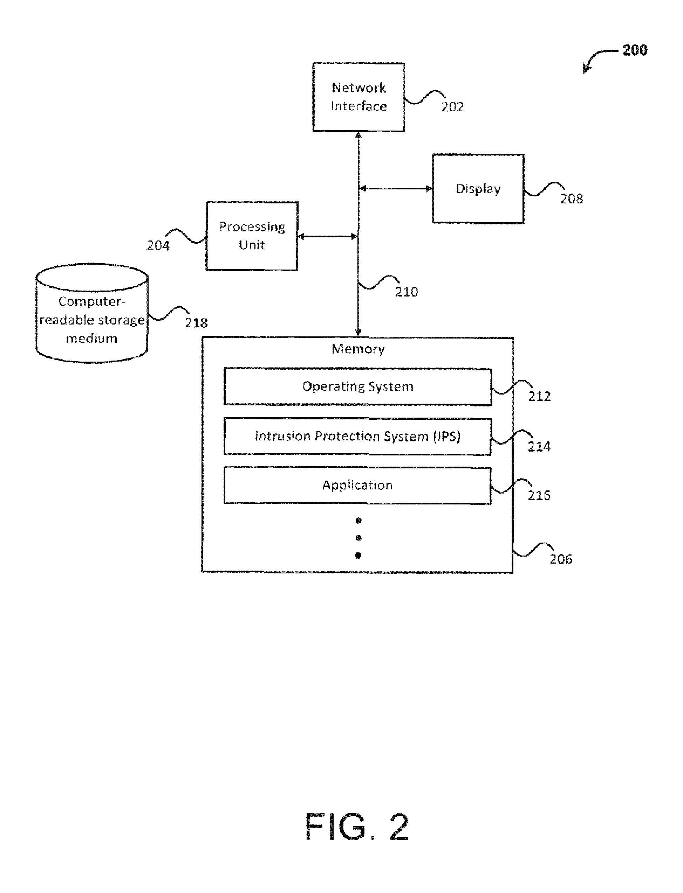

FIG. 2 illustrates components of an example computing device 200, in accordance with at least one embodiment. The computing device 200 may be similar to the computing devices 102 discussed in connection with FIG. 1. In some embodiments, computing device 200 may include many more components than those shown in FIG. 2. However, it is not necessary that all of these generally conventional components be shown in order to disclose an illustrative embodiment.

As shown in FIG. 2, computing device 200 includes a network interface 202 for connecting to a network such as discussed in connection with FIG. 1. In various embodiments, the computing device 200 may include one or more network interfaces 202 for communicating with one or more types of networks such as IEEE 802.11-based networks, cellular networks and the like.

In an embodiment, computing device 200 also includes one or more processing units 204, a memory 206, and display 208, all interconnected along with the network interface 202 via a bus 210. The processing unit(s) 204 may be capable of executing one or more methods or routines stored in the memory 206. The display 208 may be configured to provide a graphical user interface to a user operating the computing device 200 for receiving user input, displaying output, and/or executing applications, such as a web browser application. Any display known in the art may be used for the display 208 including, but not limited to, a cathode ray tube, a liquid crystal display, a plasma screen, a touch screen, an LED screen, or an OLED display.

The memory 206 may generally comprise a random access memory ("RAM"), a read only memory ("ROM"), and/or a permanent mass storage device, such as a disk drive. The memory 206 may store program code for an operating system 212, an Intrusion Protection System (IPS) 214 and one or more applications 216. The applications 216 may include one or more browser applications, such as Microsoft Internet Explorer, Mozilla Firefox, and the like, that when executed permit the user to access the World Wide Web. The applications 216 may also include applications configured to perform other functionalities such as document processing, data management, multimedia development, entertainment and the like. In some embodiments, the computing device 200 may include logic or executable program, e.g., as part of the operating system 212, to control various components of the device 200. For example, the device may include logic for controlling input/output (I/O), data storage, network access (e.g., access to radio networks such as WLAN, Bluetooth, and cellular networks).

In some embodiments, the software components discussed above may be loaded into memory 206 using a drive mechanism (not shown) associated with a non-transient computer readable storage medium 218, such as a floppy disc, tape, DVD/CD-ROM drive, memory card, USB flash drive, solid state drive (SSD) or the like. In other embodiments, the software components may alternately be loaded via the network interface 202, rather than via a non-transient computer readable storage medium 218.

In some embodiments, the computing device 200 also communicates via bus 210 with one or more local or remote databases or data stores (not shown) via the bus 210 or the network interface 202. The bus 210 may comprise a storage area network ("SAN"), a high-speed serial bus, and/or via other suitable communication technology. In some embodiments, such databases or data stores may be integrated as part of the computing device 200.

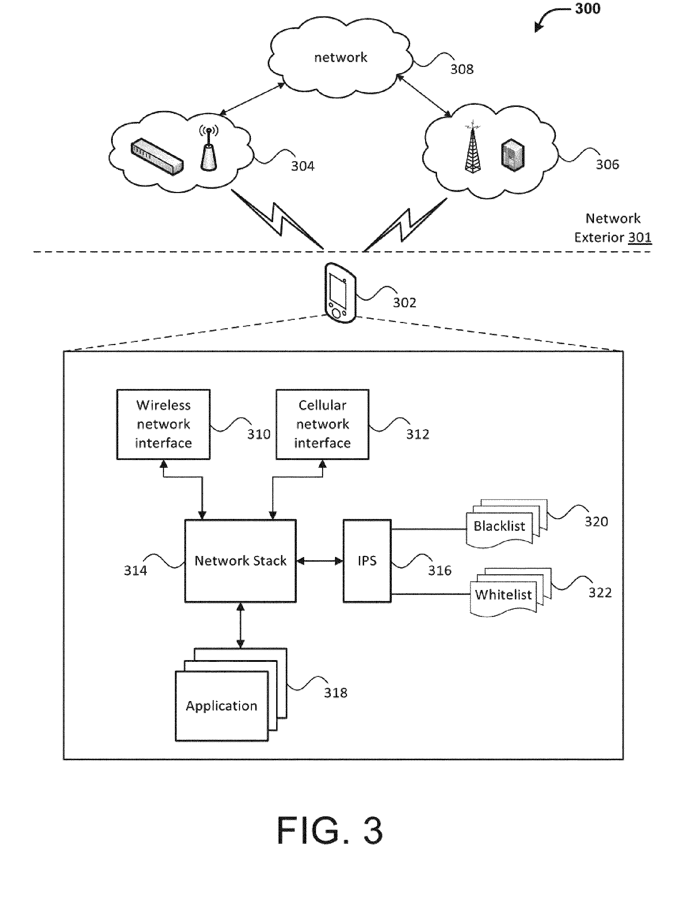

FIG. 3 illustrates another example environment 300 for implementing dynamic blacklist update, in accordance with at least one embodiment. In this example, a computing device 302, such as similar to the computing devices 102 and 200 discussed in connection with FIGs. 1 and 2, respectively, may be configured to connect to a network 308 such as the Internet, via at least a network such as a wireless network 304 and/or a cellular network 306. In general, network exterior 301 may be used to refer to the network 308, the wireless network 304, the cellular network 306 and any other network entities outside the computing device 302.

Within the computing device 302, one or more network interfaces may be used to communicate with any types of networks. For example, a wireless network interface 310 may be used to communicate with (e.g., sending and/or receiving data packets to and/or from) the wireless network 304 and a cellular network interface 312 may be used to communicate with (e.g., sending and/or receiving data packets to and/or from) cellular network 306. In various embodiments, the network interfaces may be implemented by one or more physical network interface controller such as network interface card or adapter. In an embodiment, one physical network interface controller may be configured to interface with one or more types of networks.

In some embodiments, the computing device 302 may include a network stack 314 that is configured to parse and route network traffic (e.g., data packets) between one or more applications 318 hosted by the computing device 302 and the network interfaces. In some embodiments, the computing device 302 may include an IPS 316 for detecting and/or preventing undesirable intrusion by rogue entities (e.g., computing devices, applications, processes, etc.) in the network exterior 301 or from within the computing device 302. Such intrusions may include, for example, a virus that infects an application, an unauthorized data access, malicious attack or the like.

In some embodiments, the IPS 316 may be configured to communicate with the network stack 314 to monitor and/or police network traffic between the network exterior 301 and the computing device 302. In some cases, the IPS 316 may be configured to detect a security breach and/or an imminent security threat using any suitable method or technology. In some instances, patterns or "signatures" of previously known attacks may be used to recognize a potential threat or confirm an attack. Examples of such patterns may include sequential scan of ports, use of particular file names or types, and the like. In some other instances, deviations from normal behaviors or profiles of applications, processes, users and the like may be used as indications of malicious attacks. Examples of such deviations may include high number of application authentication attempts, excessive use of computing resources (e.g., CPU time, memory usage, I/O, network bandwidth), and the like. In other instances, stateful protocol analysis may be used to track and detect suspicious activities as opposed to benign activities considered normal for various network protocol layers such as network, transport and application layers.

Once a security breach or threat is detected, the IPS may be configured to perform various intrusion protection measures or operations to prevent future attacks and/or to mitigate the damage caused by confirmed attacks such as described in U.S. Provisional Application No. 61/586,054. In various embodiments, such measures may include recording (e.g., via logs or reports) of detected activities, notifying or alerting user or system administrator of such activities, restricting the network traffic to and/or from rogue entities, changing security settings or network configurations (e.g., firewall settings) and the like. Restricting network traffic may include partially or completely blocking or otherwise modifying network traffic. In some embodiments, changing the security settings may include altering one or more access control lists such as one or more blacklists 320 and/or one or more whitelists 322.

In some embodiments, a blacklist 320 may contain information usable for identifying known or previously detected rogue entities such as described above. Such information may include a network address (e.g., Internet Protocol (IP) address, port number, Uniform Resource Identifier (URI), Media Access Control (MAC) address), host name, process identifier, application identifier, file identifier, user identifier, email address, and the like. Typically, network traffic originating from or to entities identified by the blacklist may be blocked or otherwise restricted as described above. In contrast, a whitelist 322 may contain information usable for identify entities determined to be trustworthy. Typically, network traffic originating from or to entities identified by the whitelist is allowed to go through unrestricted. Entities identified by such whitelists may include mission-critical servers such as servers that administer rules and/or policies for the IPS. This would allow the IPS to transmit information about a threat in progress, or receive updated rules or policies to provide an improved defense against the threat. In some embodiments, the types of information included in a whitelist may be similar to those of a blacklist. In various embodiments, the blacklists 320 and/or the whitelists 322 described above may be stored in one or more remote and/or local data stores such as in a file system, memory 206 or computer-readable storage medium 218 discussed in connection with FIG. 2 or a data storage service.

In various embodiments, the blacklists 320 and/or the whitelists 322 described above may include static and/or dynamic lists. Information included in a static list typically remains constant, for example, when the list is being used. A static list may be provided and/or configured by a user, a system administrator, a service provider or the like. In contrast, information included in a dynamic list may be updated (e.g., added, removed, modified), for example, in real time when the list is being used by one or more processes. In some embodiments, a blacklist or whitelist may be initially empty or populated with initial or default information (e.g., about known rogue or trustworthy entities). Over time, such a blacklist or whitelist may be updated. For example, an IPS may dynamically update a blacklist by adding information (e.g., IP addresses) as new rogue entities are being detected. For another example, update to the black or white lists may come from other sources such as administrative servers, third-party service providers and the like using push and/or pull technologies. In some embodiments, such updates may be provided on a periodic basis. As another example, when the computing device experiences a network-related change such as switching from a first network to a second network, the blacklists and/or whitelists may be updated (e.g., purged) to reflect the change.

In some embodiments, a blacklist and/or whitelist discussed above may be associated with a specific network interface, communication channel, hardware component, processes, applications and the like. For example, a computing device may have network interfaces or communication channels for IEEE 802.11-based, Bluetooth-based and cellular networks. In this example, a distinct blacklist may be associated with each of the distinct network interfaces or communication channels. In other embodiments, a global blacklist and/or whitelist may be used instead of or in addition to multiple individual lists.

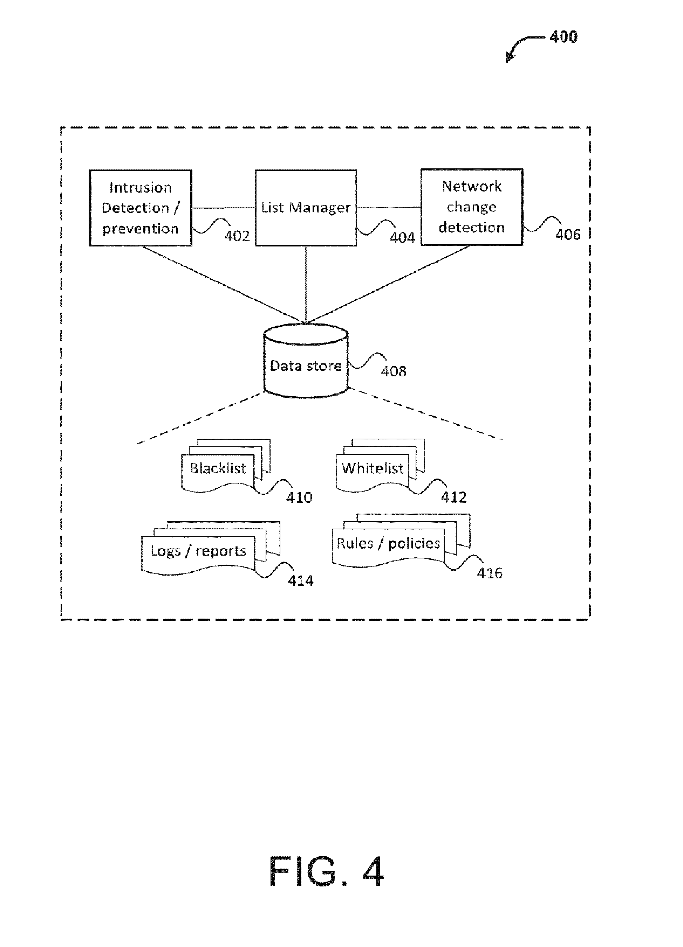

FIG. 4 illustrates components of an example IPS 400, in accordance with at least one embodiment. In an embodiment, IPS 400 includes an intrusion detection / prevention module 402 configured to analyze network traffic, for example, associated with a computing device, detect existing or potential security threat using any suitable detection techniques such as those discussed in connection with FIG. 3, and/or perform preventive or remedial measures. In some embodiments, the intrusion detection / prevention module 402 may communicate with one or more data stores 408 to read and/or update one or more blacklists 410 and/or whitelists 412 stored therein.

In some embodiments, the intrusion detection / prevention module 402 may communicate with one or more list managers 404 configured to manage the blacklists 410 and/or whitelists 412. For example, the list managers may be configured to update (e.g., add, remove, modify) information contained in the managed lists in response to a detected threat, a network-related change, an updated rules or configurations and the like. In some embodiments, each of the one or more list managers may be responsible for a subset of the blacklists and/or whitelists. For example, in an embodiment, a list manager may be configured to manage one or more blacklists associated with a particular communication channel (a WLAN radio or a cellular data modem). For another example, a list manager may be configured to manage whitelists and another list manager may be configured to manage blacklists.

In some embodiments, the IPS 400 may also include a network change detection module 406 for detecting network-related changes. Such network-related changes may trigger update of the blacklists and/or whitelists, for example, to remove potentially stale, inaccurate or otherwise inapplicable information. The network change detection module 406 may be configured to detect various types of network-related changes, such as may be detectable when the network environment for a computing device changes. For example, the computing device may be disconnected from a network and/or connected to another network. In various embodiments, examples of network-related changes may include an assignment of a new network address (e.g., IP address) associated with a computing device, the change of a server that the computing device is connected to (e.g., gateway server, Dynamic Host Configuration Protocol (DHCP) server, Domain Name Service (DNS) server, VPN server, etc.), a change of Service Set Identification (SSID) or Mobile Network Code (MNC) associated with the network that the computing device is connected to, a change in network protocols, authentication schemes and/or credentials, physical connection and/or disconnection from a network (e.g., the plugging and/or unplugging of an Ethernet cable) and any other similar changes. In an embodiment, some of the network-related changes may be detected by invoking an application programming interface (API) provided by an operating system. In some embodiments, some of the network-related changes may be detected by via messages or signals received from external sources such as servers.

In an embodiment, the network change detection module 406 may communicate with one or more list managers 404 to update (e.g., purge) blacklists 410. In another embodiment, the network change detection module 406 may perform such update directly against the data store 408 where the blacklists are stored. In various embodiments, such update may be performed to remove some or all information that is rendered stale or otherwise inapplicable by a detected network-related change. In some embodiments, such update may be selective to improve performance. For example, in an embodiment, if a network-related change involves only a particular communication channel (e.g., cellular), then only the corresponding blacklist or blacklists may be updated (e.g., purged) while the other blacklists, if any, are left alone. In some embodiments, the same selective approach may be used for updating blacklists specific to particular network interfaces, processes, accounts, applications and the like. In some embodiments, finer control over the scope or scale of the update may be provided. For example, instead of removing all information in a blacklist, a subset of the information (e.g., a particular range of IP addresses associated with a particular network) may be removed. In other embodiments, the update may be indiscriminate. For example, in an embodiment, all blacklists are purged when a network-related change is detected. In some embodiments, such updates may be performed automatically by the IPS 400 without user intervention and/or awareness. In other embodiments, such updates may be performed with user intervention and/or awareness.

Besides blacklists and whitelists, the one or more data stores 408 may also be used to store logs and/or reports 414 generated by the IPS, rules, policies and configuration files/parameters 416 used by the IPS or any other data used or generated by the IPS. In an embodiment, some of the data stored in the one or more data stores 408 (e.g., rules and policies 414, whitelist 412) may be obtained (e.g., using push or pull technologies or a combination thereof) from a remote server (e.g., at predetermined times such as system startup and/or on a periodic basis). In some embodiments, some of the data may be provided by the user, system administrator. In other embodiments, some of the data may be generated by the IPS without user intervention or awareness. In various embodiments, the data store 408 may include any local and/or remote computer-readable storage medium or media such as described above.

In general, various aspects of the IPS may be configurable, such as dictated at least in part by rules or policies 416. For example, in some embodiments, various aspects of the intrusion detection prevention module 402 may be based at least in part on the rules and policies 416. For example, such rules and policies may specify the methods and/or algorithms used to detect intrusion, conditions and threshold values for such intrusion detection, the frequency and/or timing of such intrusion detection, network components or processes monitored, intrusion prevention measures (e.g., packet dropping, content filtering, etc.) to be performed in response to intrusion detection, log location and other configuration information.

In some embodiments, various aspects of the list manager(s) 404 may be based at least in part on the rules and policies 416. For example, such rules and policies may specify the server(s) from which updated blacklist and/or whitelist information may be obtained, the frequency with which to pull or receive such updates, the mapping between the blacklists or whitelists and the associated components (e.g., network channels, processes, user accounts, etc.), the type and format of information stored in the blacklists or whitelists, the scope of list update (e.g., whether to remove a whole list or a portion of a list) and other parameters or configuration information.

In some embodiments, various aspects of the network change detection module 406 may be based at least in part on the rules and policies 416. For example, such rules and policies may specify the types of network-related changes to detect, triggers or conditions associated with network-related changes, a mapping between detected changes and corresponding blacklists and/or whitelist updates and other configuration information.

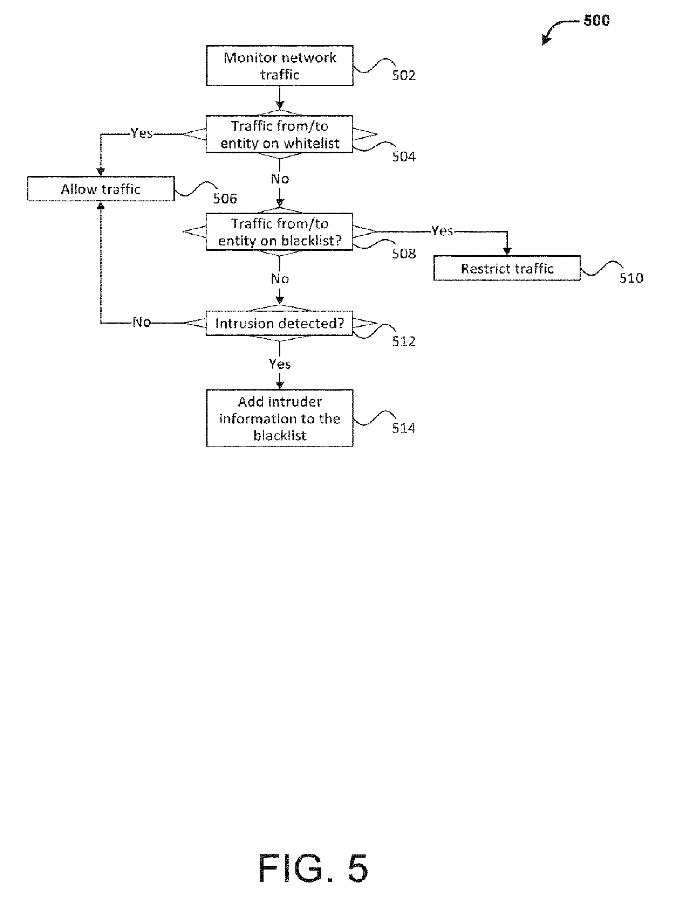

FIG. 5 illustrates an example process 500 for implementing intrusion detection and prevention, in accordance with at least one embodiment. Some or all of the process 500 (or any other processes described herein, or variations and/or combinations thereof) may be performed under the control of one or more computer systems configured with executable instructions and may be implemented as code (e.g., executable instructions, one or more computer programs or one or more applications) executing collectively on one or more processors, by hardware or combinations thereof. The code may be stored on a computer-readable storage medium, for example, in the form of a computer program comprising a plurality of instructions executable by one or more processors. The computer-readable storage medium may be non-transitory. The order in which the operations are described is not intended to be construed as a limitation, and any number of the described operations can be combined in any order and/or in parallel to implement the processes. In some embodiments, aspects of process 500 may be implemented by components of an IPS such as described in connection with FIG. 4.

In an embodiment, process 500 includes monitoring 502 network traffic, such as between processes running on a computing device and another network entity (e.g., another computing device). As discussed above, such monitoring 502 may be specific to any suitable network protocol layer or layers (such as network, transport or application layer). For example, in an embodiment, information contained in individual data packets such as source and destination IP addresses, ports, protocols and the like may be analyzed. In another embodiment, monitoring may occur at the transport or application level.

In an embodiment, process 500 includes determining 504 whether the traffic is from or to an entity on a whitelist. The whitelist may be initially empty or may contain information of known trustworthy entities (such as network address of administrative servers). In some embodiments, the whitelist may be a global whitelist or one that is particularly applicable to the current network traffic being monitored (e.g., for a particular communication channel or process). If it is determined 504 that traffic is from or to an entity on the whitelist, the network traffic may be allowed 506 to go through unrestricted.

In an embodiment, if it is determined 504 that the traffic is not from or to an entity on the whitelist, the process 500 includes determining 508 whether the traffic is from or to an entity on a blacklist. The blacklist may be initially empty or may contain information of known and/or previously-detected rogue entities. In some embodiments, the blacklist may be a global blacklist or one that is particularly applicable to the current network traffic being monitored (e.g., for a particular communication channel or process). If it is determined 508 that the network traffic is from or to an entity on the blacklist, the network traffic may be restricted 510. In some embodiments, such restriction may include partial or complete block or modification of network traffic. For example, if the source IP address and port matches that included in the blacklist, the packet may be dropped. For another example, the content of the application level traffic may be modified to remove sensitive or undesirable data. In various embodiments, the restriction may apply in to inbound traffic, outbound traffic or both. In general, the specific conditions and actions associated with a match in the blacklist may be configurable, for example, by rules and policies specified by user, administrator and the like.

In an embodiment, if it is determined 508 that the traffic is not from or to an entity on the blacklist, the process 500 includes determining 512 whether there is an intrusion based on the network traffic being monitored. Various methods such as pattern or signature recognition, anomaly-based or other types of analysis may be used. In general, the conditions, thresholds, algorithms, parameters and the like associated with intrusion detection may be configurable, for example, by rules and policies specified by user, administrator and the like.

In an embodiment, if it is determined 512 that an intrusion or a threat of intrusion has been detected, information about the suspicious intruder (e.g., network address, process identifier) may be added 514 to a blacklist. The blacklist may be a global blacklist or one that is particularly applicable to the current network traffic being monitored (e.g., for a particular communication channel or process). Otherwise, if it is determined that an intrusion or a threat of intrusion has not been detected, the network traffic may be allowed 506 to go through.

In some embodiments, some of the steps described above may be performed by asynchronous processes. For example, the detection of network intrusion (e.g., steps 502, 512 and 514) may be performed by a one process while network restriction based on blacklists and/or whitelists (e.g., steps 502-510) may be performed by another asynchronous process.

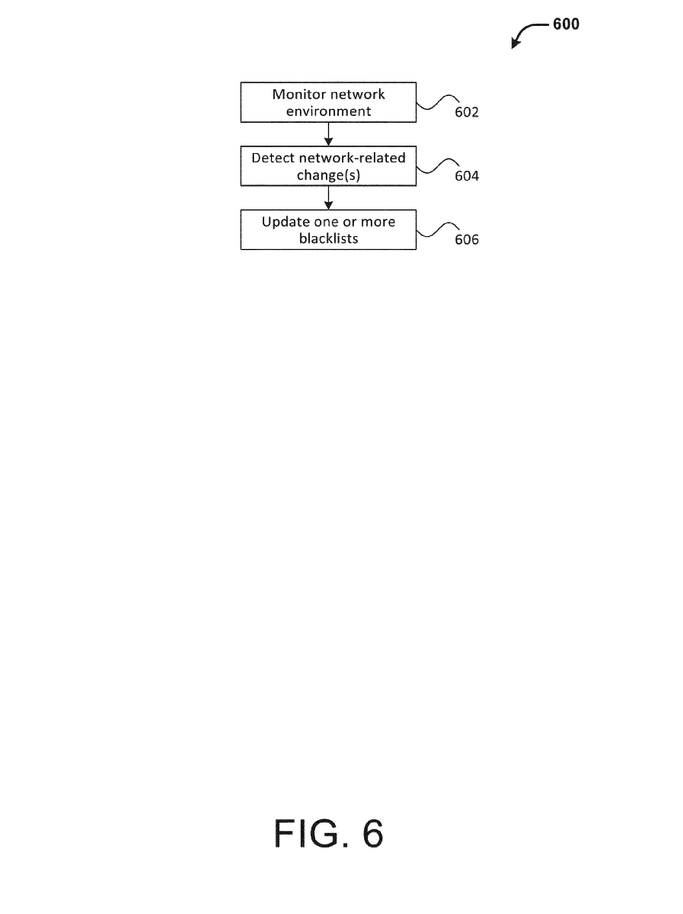

As discussed above, when a computing device moves from one network to another, the information about potential rogue entities such as included in the blacklists may become stale or otherwise inapplicable. A network address of a rogue entity in a network may coincide with a benign entity in another network. As such, the information may need to be updated when a network-related change is detected. FIG. 6 illustrates an example process 600 for implementing blacklist update, in according with at least one embodiment. In some embodiments, aspects of process 600 may be implemented by components of an IPS such as described in connection with FIG. 4.

In an embodiment, process 600 includes monitoring 602 the network environment or network context that is pertinent to a computing device. Such network environment may include various characteristics of one or more networks such as discussed in connection with FIG. 1 that may be relevant to a computing device. Such characteristics may include the network configuration, network topology, network address or subnet information, and the like. In various embodiments, monitoring the network environment of a computing device may include invoking or waiting for callbacks from an operating system driver or routine, requesting and/or receiving information from an external source (e.g., a DHCP server), inspecting network traffic (e.g., data packets) and the like. In various embodiments, such monitoring may be constant or performed at intervals.

In an embodiment, process 600 includes detecting 604 one or more network-related changes. Such detected changes may include an assignment of a new network address (e.g., IP address) associated with a computing device, the change of a server that the computing device is connected to (e.g., gateway server, DHCP server, DNS server, VPN server, etc.), a change of SSID or MNC, a change in network protocols, authentication schemes and/or credentials, physical connection and/or disconnection from a network (e.g., the plugging and/or unplugging of an Ethernet cable), a hardware change, (e.g., removal or addition of a network adapter) and any other network-related changes.

In an embodiment, in response to detecting one or more network-related changes, one or more blacklists, such as associated with a computing device, may be updated 606. In some embodiments, the blacklist update may be in response to one single detected network change. In other embodiments, the blacklist update may be in response to predetermined number of detected network changes. In general, the types and number of network-related changes that trigger blacklist update and other aspects of the updates may be configurable (e.g., by users, system administrator). In some embodiments, blacklist update may include purging or removing some or all information stored in the blacklists. In other embodiments, blacklist update may include modifying or resetting some or all information stored in the blacklists. For example, a change to a new network environment may trigger obtaining a new server-provided blacklist that may replace the old blacklist. In some embodiments, the updated blacklists may subsequently be used and/or updated in the changed network environment according to methods such as discussed in connection with FIG. 5.

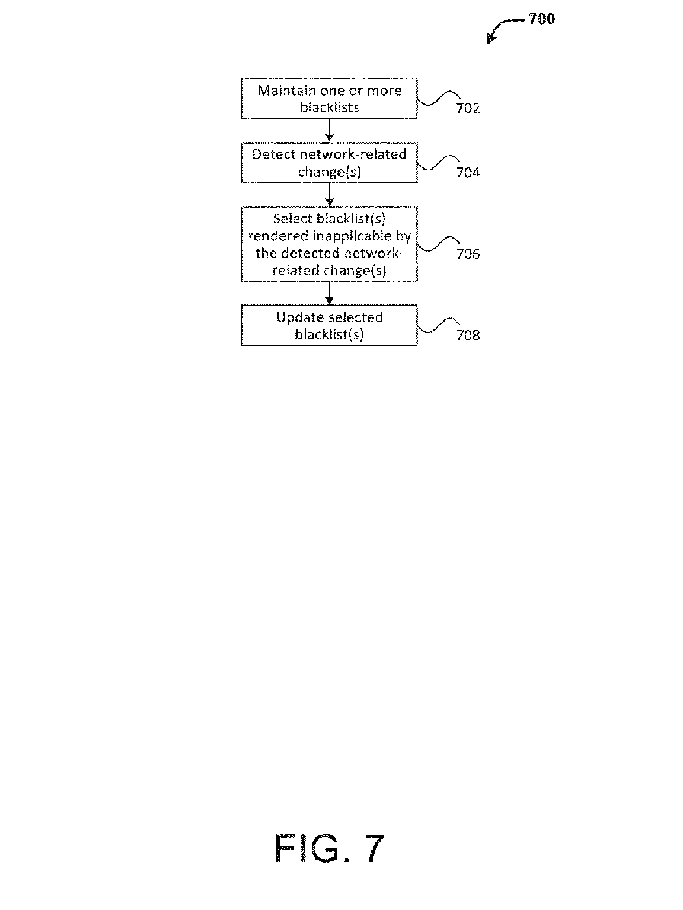

In some embodiments, rather than updating all the blacklist(s) in response to one or more detected network-related changes, only a selected subset of information included in the blacklists may be updated. The selected information may be rendered stale or otherwise inapplicable by the detected network-related changes. Such a selective approach may be useful for avoiding unnecessary updates and/or wasted intrusion detection processing while ensuring the accuracy of information. FIG. 7 illustrates an example process 700 for implementing selective blacklist update, in accordance with at least one embodiment. In some embodiments, aspects of process 700 may be implemented by components of an IPS such as described in connection with FIG. 4.

In an embodiment, the process 700 includes maintaining one or more blacklists 702, such as discussed in connection with FIGs. 3, 4 and 5. Upon the detection 704 of one or more network-related changes (e.g., disconnect from a network or connection with a new network, connection to a new DHCP server), one or more blacklists may be selected 706 for updates. The selection 706 may be based at least in part on the detected network-related change(s). For example, when only a subset of the communication channels transfers to a distinct network, only the blacklists associated with subset of communication channels may need to be updated (e.g., purged) while the blacklists associated with the other communication channels may remain unmodified. In other embodiments, all dynamic blacklists may be purged if any one communication channel roams to a distinct network. In some embodiments, aspects of the selection process (e.g., conditions and criteria) may be configurable. In an embodiment, process 700 includes updating 708 the selected blacklists such as discussed in connection with step 606 of process 600 in FIG. 6.

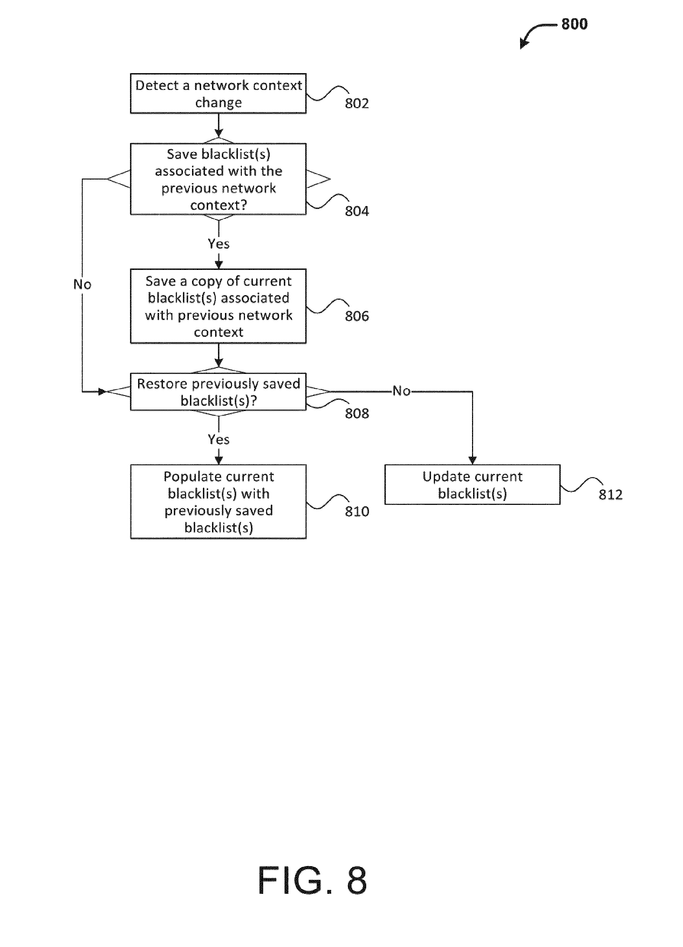

In some embodiments, rather than removing information (e.g., blacklist) associated with a first network environment when a computing device moves from the first network environment to a second network environment, such information may be saved (e.g., in a cache) for subsequent use when the device returns to the first network environment. Such an approach may be used to avoid wasting computing resources spent in intrusion detection processing. FIG. 8 illustrates an example process 800 for implementing blacklist update using such an approach, in accordance with at least one embodiment. In some embodiments, aspects of process 800 may be implemented by components of an IPS such as described in connection with FIG. 4.

In an embodiment, process 800 includes detecting 802 a change that indicates a change in network context, such as may occur when computing device previously connected to a first network is connected to a second network. Such changes may include detection of a new IP address, gateway server, DHCP server, VPN server, SSID, MNC and the like.

In an embodiment, process 800 includes determining 804 whether to save one or more blacklists associated with the previous network context. Such blacklists may be rendered stale or inapplicable by the detected network change and may be selected in a fashion similar to that discussed in connection with step 706 of process 700 of FIG. 7. In some embodiments, the determination may be based on availability of space, the likelihood of usefulness in a subsequent reconnection with the previous network context, and other information. If it is determined 804 that the blacklists should be saved, the process 800 includes saving 806 a copy of the applicable blacklists, for example, to a cache or any remote or local data store.

If it is determined 804 that the blacklists should not be saved (e.g., due to lack of space or concern for accuracy) or if the blacklists have been saved, the process 800 includes determining 808 whether to restore one or more previously saved blacklists. Such determination may be based on whether a saved copy exists for the new network context, whether the information stored in the saved copy may still be valid and other considerations. For example, the SSID or MNC of the new network context may be used to look up a cache to determine whether a previously saved copy of blacklist(s) exists for the new network context. To prevent the use of stale information, in an embodiment, saved copies of blacklists may be valid for only a limited period of time (e.g., two hours). For example, each copy may be associated with a Time to Live (TTL) indication that indicates when the copy becomes invalid. In other embodiments, other methods or mechanisms may be used to determine the staleness of such previously stored information. In some embodiments, aspects of the above process may be configurable (e.g., by parameters or configuration files set by a user or administrator).

In an embodiment, if it is determined 808 that no previously stored copies of blacklists may be used (e.g., because no such entries exist in the cache or because the TTLs associated with such entries have expired), the process 800 includes updating 812 (e.g., purging) the current blacklists such as described in connection with FIG. 6. Otherwise, if it is determined that one or more previously stored copies of blacklists may still be used to populate 810 the current blacklists, information included in such previously stored copies may be used to populate some or all of the blacklists that need to be updated. In some embodiments, some or all of the blacklists may be purged before being populated with previously stored information. In an embodiment, some of the blacklists that need to be updated may be purged while others that need to be updated may be populated with information included in the previously stored blacklists. In some embodiments, some but not all of the previously stored blacklist information for the given network context may be used to populate the current blacklists.

Variations of embodiments discussed herein are also contemplated. For example, in some instances, methods and techniques described herein may be applied to update whitelists as well as blacklists when a network-related change occurs. For another example, the IPS described herein may be located between networks (such as in a perimeter network). In such a case, the methods and techniques described herein may be used by the IPS to update blacklists and/or whitelists in response to a network configuration change associated with external or internal networks. As yet another example, various components of the IPS discussed herein may be implemented by the same or different physical or logical computer systems.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

## Claims

1. A computer-implemented method for protecting a computing device, comprising:
maintaining a blacklist associated with a computing device, the blacklist including information about one or more entities determined likely to pose a threat to the computing device;
detecting a network-related change; and
in response to detecting the network-related change, updating the blacklist associated with the computing device.

2. The computer-implemented method of claim 1, wherein the information about the one or more entities include at least one of a network address, a port number, or an application identifier associated with the one or more entities.

3. The computer-implemented method of claim 1 or claim 2, wherein maintaining the blacklist comprises:
detecting a network intrusion by an entity; and
adding information about the entity to the blacklist.

4. The computer-implemented method of any one of the preceding claims, wherein the network-related change includes at least one of a change in network connectivity of the computing device, a change in a network address associated with the computing device or a change in a network identifier.

5. The computer-implemented method of any one of the preceding claims, wherein the network-related change is specific to one of a network, a communication channel, a network layer, a user or a process.

6. The computer-implemented method of any one of the preceding claims, wherein the network-related change is associated with at least one wireless connection.

7. The computer-implemented method of any one of the preceding claims, wherein updating the blacklist associated with the computing device includes removing at least some of the information included in the blacklist.

8. The computer-implemented method of any one of the preceding claims, wherein updating the blacklist associated with the computing device is based at least in part on the detected network-related change.

9. The computer-implemented method of any one of the preceding claims, wherein updating the blacklist associated with the computing device includes removing information included in the blacklist that is rendered inapplicable by the detected network-related change.

10. The computer-implemented method of any one of the preceding claims, further comprising saving at least some of the information included in the blacklist prior to updating the blacklist.

11. The computer-implemented method of any one of the preceding claims, wherein the computing device is a mobile device.

12. A computer system for preventing network intrusions, comprising:
one or more processors; and
memory, including instructions executable by the one or more processors to cause the computer system to at least:
maintain one or more blacklists each including information about one or more entities determined likely to pose a threat to the computing system;
detect one or more network-related changes relevant to the computer system;
select a subset of the one or more blacklists rendered inapplicable by the detected one or more network-related changes; and
update selected subset of the one or more blacklists.

13. The computer system of claim 12, wherein the one or more network related change includes at least a changed Service Set Identification (SSID) or a changed Mobile Network Code (MNC).

14. The computer system of claim 12 or claim 13, wherein the one or more blacklists each corresponds to a distinct communication channel.

15. The computer system of any one of claims 12 to 14, wherein the instructions executable by the one or more processors further cause the computer system to determine whether to restrict network traffic between the computing system and the one or more entities based at least in part on the one or more blacklists.

16. The computer system of claim 15, wherein restricting network traffic between the computing system and the one or more entities is further based on one or more whitelists.

17. A computer program product comprising executable instructions that, when executed by one or more processors of a computer system, cause the computer system to at least:
detect a network-related change relevant to a computing device; and
in response to detecting the network-related change, update a blacklist associated with the computing device, the blacklist including information about one or more entities determined likely to pose a pose threat to the computing device.

18. The computer program product of claim 17, wherein the executable instructions further cause the computer system to:
monitor network traffic to or from the computer system to detect network intrusion;
update the blacklist if a network intrusion is detected; and
managing the network traffic based at least in part on the blacklist.

19. The computer program product of claim 18, wherein managing the network traffic is further based on a white list that includes information about one or more entities determined not to pose a threat to the computer system.

20. The computer program product of any one of claims 17 to 19, wherein updating the blacklist is based at least in part on configurable information.

21. The computer program product of any one of claims 17 to 20, comprising one or more non-transitory computer-readable storage media having said executable instructions stored thereon.
